# EUROPÄISCHE PATENTSCHRIFT

(11) **EP 0 406 476 B1**
(45) Veröffentlichungstag und Bekanntmachung des Hinweises auf die Patenterteilung: **14.06.1995**
(21) Anmeldenummer: 89117921.0
(22) Anmeldetag: 28.09.1989
(51) Int. Cl.: E04B 9/22

(54) **Deckenverkleidung**
False ceiling
Faux-plafond

(30) Priorität: 01.07.1989 DE 3921719
(43) Veröffentlichungstag der Anmeldung: 09.01.1991
(73) Patentinhaber: Wilhelmi Werke GmbH & Co.KG, D-35631 Lahnau (DE); ABB FLÄKT AKTIEBOLAG, S-104 81 Stockholm (SE); ZENT-FRENGER Gesellschaft für Gebäudetechnik mbH, D- 64646 Heppenheim (DE)
(72) Erfinder: Schmitt-Raiser, Karl August, Dipl.-Ing., D-6330 Wetzlar 15 (DE); Nüssle, Fritz, Dipl.-Ing., D-7252 Weil der Stadt (DE)
(74) Vertreter: Missling, Arne, Dipl.-Ing.

(56) Entgegenhaltungen:
- CA-A- 1 096 578
- DE-A- 2 740 288
- FR-A- 1 148 856
- FR-A- 2 584 756

## Beschreibung

Die Erfindung betrifft eine Deckenverkleidung mit einem aus Längsträgern und mit diesen verbundenen Querträgern aufgebautem Raster, mit in den Rasterfeldern eingehängten Platten sowie mit oberhalb der Platten angeordneten Wärmetauscherelementen.

Deckenverkleidungen bzw. abgehängte Decken mit Wärmetauscherelementen sind aus dem Stand der Technik bekannt. Diese Deckenverkleidungen dienen dazu, Wärme aus dem jeweiligen Raum abzuführen, wobei die Kontaktflächen der Deckenverkleidungselemente selbst als Kühlflächen dienen, so daß zusätzliche Wärmetauscherelemente, welche separat in den Raum eingebracht werden müßten, nicht erforderlich sind. Der Vorteil derartiger Deckenverkleidungen liegt darin, daß diese zum einen optisch so ausgebildet sein können, daß sie den Gesamteindruck des Raumes nicht beeinträchtigen und daß zum anderen eine freie Nutzung des Raumes nicht eingeschränkt wird. So ist es beispielsweise möglich, Raumteiler o.ä. in den Raum einzusetzen, ohne Änderungen an der Deckenkonstruktion vornehmen zu müssen.

Das bei den bekannten Deckenverkleidungen auftretende Problem besteht darin, daß die Wärmetauscherelemente, welche oberhalb der Deckenverkleidungsplatten angeordnet sind, mit diesen so in Kontakt gebracht werden müssen, daß zwischen den Platten und den Wärmetauscherelementen eine möglichst gute Wärmeübertragung stattfindet. Dabei ist es insbesondere erforderlich, daß die Wärmetauscherelemente sich in direktem Kontakt zu den Platten befinden, da Luftspalte zu einer Isolierung und damit zu einer Unterbrechung des Wärmeübergangs führen würden.

Bei den bisher bekannten Konstruktionen mußte man zur Erzeugung genügender Anpreßkraft für gute Wärmeleitung dickwandiges Material einsetzen, das herstellungsbedingt in der Breite der Sichtpaneele ein bestimmtes Maß nicht überschreiten kann. Für genügende Schallabsorptionswirkung und gute Demontabilität waren zudem Fugen zwischen den in Paneelstruktur angeordneten Sichtprofilen erforderlich.

Ein besonderes Problem ist in diesem Zusammenhang auch die Halterung der Platten an den Wärmetauscherelementen. Die sichtbare Gesamtfläche der Decke soll dabei möglichst keine Störstellen aufweisen, wie sie etwa bei einer Anordnung entsprechend der Französischen Patentschrift 1.148.856 durch Haltebleche entstehen, die beiderseits der Platten vorgesehen sind, um diese mittels Rohrschellen an den Wärmetauscherelementen zu befestigen.

In der Französischen Patentschrift 2 584 756 A1 ist auch bereits stattdessen vorgeschlagen worden, die Platten durch eine magnetische Haftkraft zu haltern und dazu die ein Rasterfeld bildenden Längs- und Querträger mit einer ebenen, auf die Platten gerichteten Unterseite zu versehen und an dieser Unterseite jeweils deren ganze Fläche einnehmende, blechartige permanentmagnetische Bauelemente anzubringen, an welche die Platten angelegt werden. Eine solche Ausführung hat den Nachteil, daß der Wärmeübergang von den Wärmetauscherelementen auf die Platten erschwert wird, weil mehrere Wärmeübergangsstellen entstehen; hinzu kommt die erforderliche Wärmeleitung durch die permanentmagnetischen Bauelemente, so daß insgesamt ein erheblicher Wärmewiderstand vorhanden ist.

Der Erfindung liegt die Aufgabe zugrunde, die Nachteile des Standes der Technik zu beseitigen und dazu preiswerte, dünnwandige Deckenplatten aus Stahlblech in fast beliebigen Formaten zu verwenden, die hinsichtlich ihrer Oberflächenbehandlung hohe akustische und lichttechnische Ansprüche erfüllen und dabei fast fugenlos verlegt werden können.

Erfindungsgemäß wird die Aufgabe dadurch gelöst, daß die Wärmetauscherelemente mittels Magnetkraft an den Platten gehaltert sind und eine im wesentlichen plane Unterfläche aufweisen und daß die Haltemagnete seitlich der planen Unterflächen an den Wärmetauscherelementen angeordnet sind und im wesentlichen in einer Ebene mit deren Unterflächen liegen.

Die erfindungsgemäße Deckenverkleidung zeichnet sich durch eine Reihe erheblicher Vorteile aus. Da eine Halterung der Wärmetauscherelemente an den Platten oder umgekehrt mittels Magnetkraft erfolgt, ist zum einen stets eine flächige und gute Anlage der Platten an den Wärmetauscherelementen sichergestellt, zum anderen lassen sich die Platten in besonders einfacher Weise montieren bzw. demontieren, da keine weiteren Verbindungseinrichtungen zwischen den Wärmetauscherelementen und den Platten zu lösen bzw. einzurasten sind. Vielmehr erfolgt bei der Montage der Platten selbst eine automatische Anlagerung an den Wärmetauscherelementen, so daß ein Wärmeübergang durch Leitung im wesentlichen ungestört erfolgen kann.

Ein weiterer, wesentlicher Vorteil der erfindungsgemäßen Deckenverkleidung liegt darin, daß bei der Montage keine zusätzlichen Kontrollarbeiten nötig sind, um nachzuprüfen, ob die Wärmetauscherelemente an den Platten in ausreichender Weise fixiert sind. Es erfolgt vielmehr eine selbsttätige Zuordnung. All dies senkt die notwendigen Montagearbeiten auf ein Minimum, da außer der Befestigung der Platten selbst keine weiteren Arbeiten notwendig sind.

In einer besonders günstigen Ausgestaltung der Erfindung ist vorgesehen, daß die Platten aus einem dünnen Blechmaterial gefertigt sind. Erfindungsgemäß ist es somit möglich, das Gewicht der einzelnen Platten erheblich zu reduzieren und zugleich einen ausreichenden Wärmeübergang zu den Wärmetauscherelementen sicherzustellen. Der besondere Vorteil der erfindungsgemäßen Ausgestaltung liegt darin, daß die bei sehr dünnen Platten auftretenden Verformungen sich auf die Wärmeübergangsvorgänge nicht auswirken, da die Magnetkraft die Platten an die Wärmetauscherelemente zieht. Hierbei tritt zusätzlich noch der Effekt auf, daß die Platten durch die Wärmetauscherelemente in ihrer Form stabilisiert werden, so daß insbesondere bei größerflächigen Platten keine Durchbiegungen o.ä. zu befürchten sind.

Vorteilhaft werden dünne gelochte und mit einer auf ihrer Sichtseite mit einer porösen Beschichtung versehenen Platten verwendet, die ausgezeichnete Akustikeigenschaften haben. Man erhält hierdurch im Vergleich zum Stand der Technik eine wirksame Kühldecke mit einem geringen Gewicht und einer hohen Schallabsorption.

Erfindungsgemäß ist das Wärmetauscherelement bevorzugterweise so ausgebildet, daß dieses ein Rohr und eine an dessen unterem Bereich gelagerte Profilschiene umfaßt, welche eine im wesentlichen plane Unterfläche aufweist. Das Wärmetauscherelement ist somit im wesentlichen zweiteilig aufgebaut und gestattet es, die Profilschiene in ihrer Ausgestaltung und Dimensionierung in optimaler Weise den jeweiligen Anforderungen anzupassen, während gleichzeitig das Rohr selbst im wesentlichen beliebig ausgebildet sein kann, insbesondere auch hinsichtlich der Materialauswahl, welche besonders im Hinblick auf Korrosionserscheinungen oder Dichtigkeitsprobleme bei dem jeweils verwendeten Kühlmittel eine erhebliche Rolle spielt.

Zur Aufbringung der Magnetkraft ist erfindungsgemäß vorgesehen, daß an dem unteren Bereich der Profilschiene Haltemagnete angeordnet sind. Diese können in Form von Einzelmagneten aufgebracht sein, es ist jedoch auch möglich, die Haltemagnete jeweils streifenförmig auszugestalten und über die gesamte Länge der Profilschiene anzuordnen.

In einer besonders günstigen Ausbildung der Erfindung ist die Profilschiene mit seitlichen, bezüglich der Unterfläche zurückversetzten Flanschen versehen, an welchen die Haltemagneten angeordnet sind. Durch diese Ausgestaltungsform ist zum einen sichergestellt, daß die Haltemagneten in geeigneter Weise an der Profilschiene befestigt werden können und daß zum anderen die im wesentlichen plane Unterfläche der Profilschiene vollständig gegen die jeweilige Oberfläche der Platte angelegt werden kann. Die Dicke der Magnete wird selbstverständlich in geeigneter Weise bestimmt. Der Wärmefluß von den Platten erfolgt somit direkt in das Material der Profilschiene, so daß die Haltemagneten hinsichtlich der Wärmeleitung keine Rolle spielen. Daraus ergibt sich der Vorteil, daß durch eine geeignete Materialauswahl der Profilschiene gute Wärmeleiteigenschaften erzielt werden können, während das Material der Haltemagneten lediglich im Hinblick auf die erforderliche Haltekraft bestimmt wird.

Um erfindungsgemäß das Rohr in sicherer Weise an der Profilschiene zu befestigen oder zu lagern und dabei sowohl einen guten Wärmeübergang als auch gute mechanische Festigkeitswerte vorzusehen, ist vorgesehen, daß die Profilschiene einen im wesentlichen U-förmigen Querschnitt aufweist und mit einem teilzylindrischen Bereich zur Aufnahme des Rohrs versehen ist. Der U-förmige Querschnitt bildet zum einen die im wesentlichen plane Unterfläche aus, welche sich in Anlage an der Deckenverkleidungsplatte befindet, zum anderen wird durch den U-Querschnitt eine ausreichende mechanische Festigkeit und Verwindungssteifigkeit der Profilschiene sichergestellt. Zusätzlich ist es möglich, wie nachfolgend beschrieben werden wird, die freien Schenkel des U-Profils zur Lagerung oder Befestigung der Profilschiene zu verwenden. Demgegenüber dient der teilzylindrische Bereich zur Aufnahme des Rohres und gestattet es, dieses zumindest teilweise formschlüssig zu umgreifen, um auch zwischen dem Rohr und der Profilschiene einen problemlosen Wärmeübergang sicherzustellen.

Alternativ zu der beschriebenen Ausgestaltungsform ist es selbstverständlich auch möglich, die Profilschiene einstückig mit dem Rohr auszubilden, um auf diese Weise weitere Wärmeübergangsstellen und Kontaktflächen vermeiden zu können.

Die freien Schenkel der Profilschiene können an ihren freien Enden mit Verdickungen versehen sein, welche formschlüssig in Ausnehmungen der Querträger halterbar sind. Zusätzliche Befestigungselemente zur Lagerung der Profilschienen sind somit nicht erforderlich. In Abhängigkeit von der jeweiligen Ausgestaltung der Deckenverkleidung ist es selbstverständlich auch möglich, die Profilschienen an den Längsträgern oder sonstigen Tragelementen zu lagern.

Um einen weitgehend standardisierten Aufbau der Deckenverkleidung zu ermöglichen, kann erfindungsgemäß weiterhin vorgesehen sein, daß die Profilschienen nicht an den Querträgern selbst, sondern an parallel zu diesen angeordneten, zahnstangenartigen Lagerschienen aufgehängt sind. Diese Ausgestaltungsform bringt den Vorteil, daß das Profil der Querträger nicht verändert werden muß, so daß diese auch bei standardisierten, nicht mit einer Kühlung versehenen Deckenverkleidungen verwendet werden können. Die zusätzlichen Lagerschienen können in einfacher Weise mittels Schraub- oder Steckverbindungen oder über sonstige Verbindungselemente mit den Querträgern verbunden sein.

In einer besonders günstigen Ausführungsform der Erfindung ist vorgesehen, daß die Lagerschiene mittels Federbügeln an den Längsträgern gehaltert wird. Bei dieser Ausgestaltungsform ist eine direkte Befestigung an den Querträgern nicht erforderlich, so daß diese nicht durch zusätzliche Bohrungen o.ä. geschwächt werden. Weiterhin gestattet diese Ausführungsform das nachträgliche Anbringen der Lagerschienen bzw. der Wärmetauscherelemente an bereits bestehenden Unterkonstruktionen.

Alternativ zu der Befestigung der Profilschiene an den Querträgern bzw. den Lagerschienen ist es auch möglich, die Profilschiene mittels Halterungselementen, welche die Querträger umgreifen, an diesen zu lagern. Die Halterungselemente sind dabei bevorzugterweise so ausgebildet, daß diesen den teilzylindrischen Bereich der Profilschiene umgreifen bzw. an diesen verankerbar sind. Es ist jedoch auch möglich, die Halterungselemente an den freien Schenkeln der Profilschiene einzurasten.

Der Zu- oder Abfluß des Kühlmittels zu bzw. von den Rohren der Wärmetauscherelemente erfolgt in günstiger Weise dadurch, daß oberhalb der Querträger Anschlußrohre angeordnet sind, von denen jeweils die Rohre der Wärmetauscherelemente abzweigen. Diese Ausgestaltung vereinfacht den Gesamtaufbau der Deckenverkleidung, da die Vielzahl einzelner Rohre der Wärmetauscherelemente jeweils mit einem zentralen Anschlußrohr verbunden sind, welches wiederum über entsprechende Anschlußstücke mit dem Kühlmittelkreislauf in Verbindung steht. Es ist damit möglich, rasterartige Rohrbereiche vorzufertigen und in eine standardisierte Deckenausgestaltung einzubringen. Die Montagearbeiten werden dadurch erheblich vereinfacht, da es lediglich erforderlich ist, die jeweiligen Anschlußrohre untereinander zu verbinden bzw. an den Kühlmittelkreislauf anzuschließen, während die einzelnen Rohre der Wärmetauscherelemente bereits vor der Montage mit den Anschlußrohren verbunden sind.

Erfindungsgemäß ist es somit möglich, sehr dünne Plattenmaterialien zu verwenden, welche so an den Wärmetauscherelementen gehaltert sind, daß der Wärmeübergang zwischen den Platten und den Wärmetauscherelementen mit hohem Wirkungsgrad erfolgen kann.

Im folgenden wird die Erfindung anhand von Ausführungsbeispielen in Verbindung mit der Zeichnung beschrieben. Dabei zeigt:
- Fig. 1: eine perspektivische Teilansicht, in der Draufsicht, auf ein Ausführungsbeispiel einer erfindungsgemäßen Deckenverkleidung,
- Fig. 2: eine stirnseitige Ansicht auf das in Fig. 1 rechte Ende der Deckenverkleidung,
- Fig. 3: ein weiteres Ausführungsbeispiel, ähnlich Fig. 2,
- Fig. 4: eine Seitenansicht, in vereinfachter Darstellung, auf die gemäß Fig. 1 linke Seite der Deckenverkleidung,
- Fig. 5: ein weiteres Ausführungsbeispiel in einer stirnseitigen Ansicht ähnlich den Fig. 2 und 3.

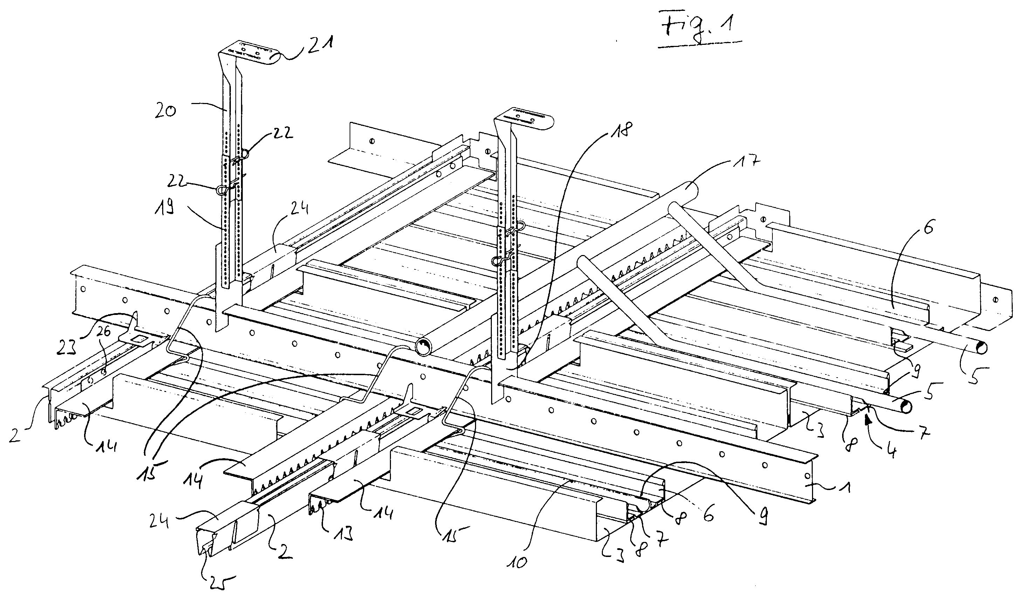

In Fig. 1 ist in perspektivischer Ansicht ein Teilbereich eines Ausführungsbeispiels einer fertig montierten erfindungsgemäßen Deckenverkleidung dargestellt. Dieser umfaßt mehrere zueinander parallele Längsträger 1, an welchen, jeweils rechtwinklig zu den Längsträgern 1, Querträger 2 gelagert sind, so daß sich insgesamt ein im wesentlichen rechteckförmiges Raster ergibt, in welches Platten 3 einbringbar sind. Die Platten 3 sind in üblicher Weise so ausgebildet, daß die gesamte Deckenverkleidung eine im wesentlichen plane Unterfläche aufweist.

Bei dem gezeigten Ausführungsbeispiel erfolgt die Aufhängung der Längsträger 1 an einer Decke über Haltelaschen 18, welche formschlüssig in den doppel-T-förmigen Querschnitt der Längsträger 1 eingehängt sind. An den Haltelaschen 18 sind Aufhängebügel 19 befestigt, welche einen U-förmigen Querschnitt aufweisen und an ihren Schenkeln mit einer Vielzahl von Ausnehmungen versehen sind. In die Aufhängebügel 19 passen an ihren unteren Enden U-förmige Abhängestreben 20, deren Schenkel ebenfalls mit einer Vielzahl von Ausnehmungen versehen sind. Die oberen Bereiche der Abhängestreben 20 sind rechtwinklig abgebogen und bilden Befestigungsplatten 21, welche mit der jeweiligen Gebäudedecke verschraubt sind. Durch die Schenkel der Aufhängebügel 19 und der Abhängestreben 20 sind jeweils Sicherungsstifte 22 gesteckt, um eine Längenanpassung der Aufhängung zu ermöglichen und die Längsträger 1 horizontal auszurichten.

An den Längsträgern 1 sind die Querträger 2 über Verbindungselemente 23 befestigt, welche in üblicher Weise ausgebildet sind und jeweils formschlüssig sowohl den Längsträger als auch den jeweiligen Querträger umfassen.

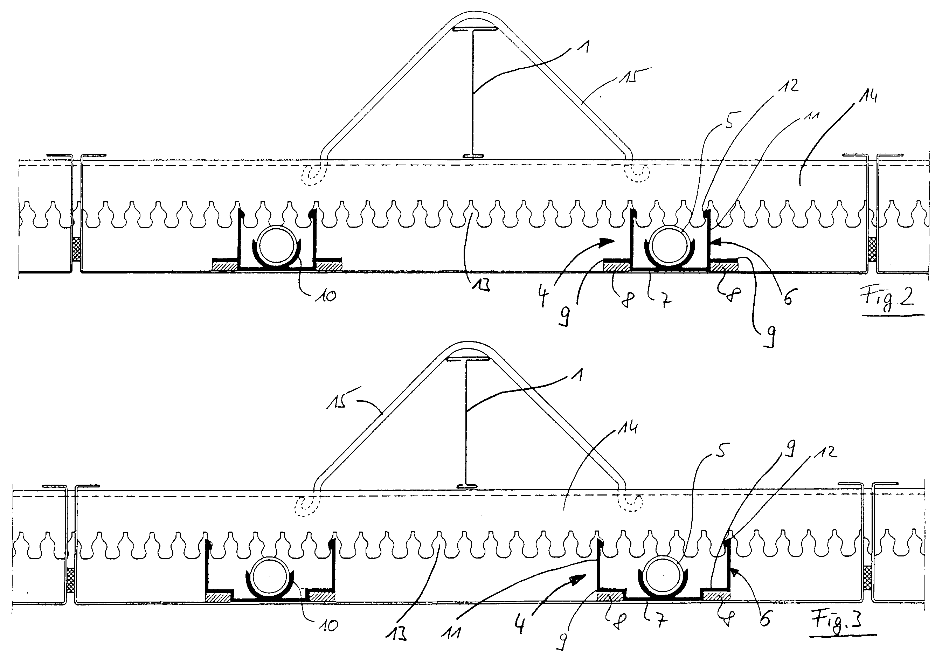

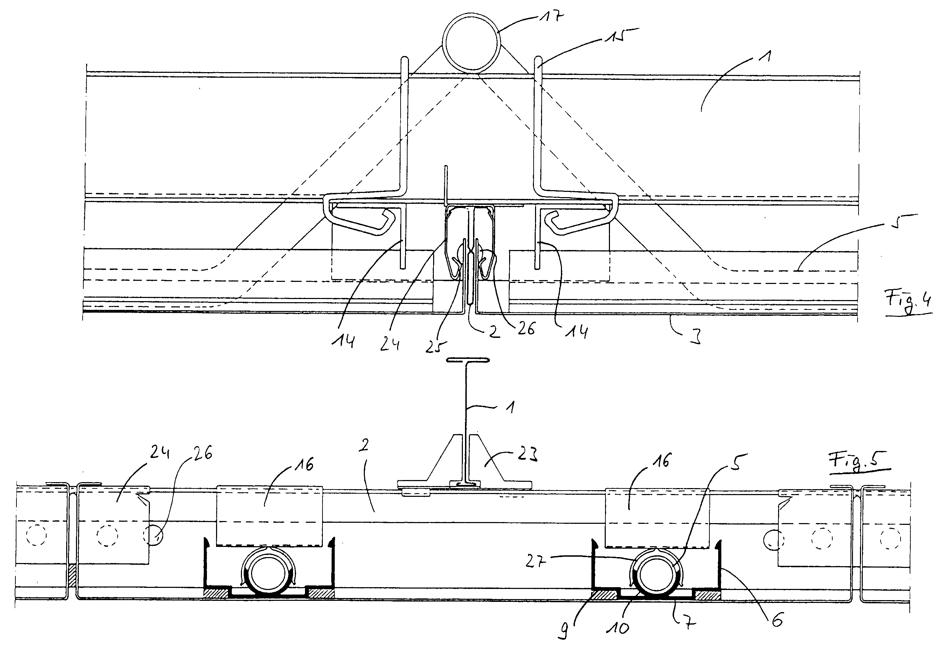

Bei dem in Fig. 1 gezeigten Ausführungsbeispiel, welches in der stirnseitigen Ansicht auch in den Fig. 2 und 3 gezeigt ist, sind parallel zu den Querträgern 2 jeweils Lagerschienen 14 angeordnet, welche mittels Federbügeln 15 separat und unabhängig von den Querträgern 2 an den Längsträgern 1 verankert oder aufgehängt sind. Die Lagerschienen 14 weisen einen L-förmigen Querschnitt auf und sind an den freien, nach unten weisenden Schenkeln mit einer Vielzahl von zahnartigen Ausnehmungen 13 versehen.

Bei dem gezeigten Ausführungsbeispiel weisen die Platten 3 jeweils einen planen Mittelbereich auf, während die freien Enden jeweils umgebogen sind und sich nach oben erstrecken, wobei der freie Rand nochmals abgekantet ist, so daß ein im wesentlichen U-förmiger Randbereich gebildet wird. Die Befestigung der Platten 3 erfolgt in üblicher Weise, wobei diese an dem Querträger 2 mittels Klemmelementen gehaltert sind. Die Klemmelemente 24 weisen, wie aus Fig. 1 ersichtlich, ebenfalls einen im wesentlichen U-förmigen Querschnitt auf, wobei die freien Schenkel federnd ausgebildet sind und nach innen und oben weisende Vorsprünge 25 umfassen. Diese Vorsprünge 25 können formschlüssig gegen Ausprägungen 26 angelegt werden, welche an den jeweiligen umgebogenen Schenkeln der Platten vorgesehen sind, um diese gegen ein Herabfallen zu sichern.

Erfindungsgemäß sind die Platten 3 aus einem sehr dünnen Blechmaterial gefertigt.

Oberhalb der Platten 3 sind erfindungsgemäß Wärmetauscherelemente 4 vorgesehen, welche ein Rohr 5 sowie eine Profilschiene 6 umfassen. Wie in Fig. 1 gezeigt, sind die einzelnen Rohre 5 jeweils mit einem Anschlußrohr 17 verbunden, um einen Kühlmittelkreislauf auszubilden.

Die Profilschiene, von welcher in den Fig. 2 und 3 unterschiedliche Ausführungsbeispiele gezeigt sind, umfaßt jeweils im wesentlichen plane Unterfläche, welche gegen die jeweilige Platte 3 flächig anlegbar ist. Weiterhin sind an der Profilschiene Haltemagnete 8 befestigt, welche dazu dienen, die Platte 3 gegen die Profilschiene 6 zu ziehen und an dieser zu verankern

Bei den gezeigten Ausführungsbeispielen ist die Profilschiene 6 jeweils so ausgebildet, daß diese im wesentlichen ein U-förmiges Profil aufweist, wobei die Schenkel 11 des U-Profils an ihren freien Enden mit Verdickungen 12 versehen sein können, welche formschlüssig in die Ausnehmungen 13 der Querträger 2 bzw. der Lagerschienen 14 einbringbar sind, so wie dies in den Fig. 2 und 3 dargestellt ist. Weiterhin ist im Innenraum des U-Profils ein teilzylindrischer Bereich 10 angeordnet, in welchem das Rohr 5 aufnehmbar ist.

Zur Befestigung der Haltemagnete 8 weist die Profilschiene seitliche Flansche 9 auf, welche, bezogen auf die Unterfläche 7, um die Dicke der Haltemagnete 8 zurückversetzt sind. Die seitlichen Flansche können, wie in Fig. 2 gezeigt, entweder separat oder zusätzlich an dem U-Profil vorgesehen sein, sie können auch einen Teil des zentrischen Bereichs des U-Profils bilden (siehe das in Fig. 3 gezeigte Ausführungsbeispiel).

In Fig. 5 ist ein weiteres Ausführungsbeispiel der erfindungsgemäßen Deckenverkleidung dargestellt, bei welchem die Lagerung der Profilschienen 6 nicht mittels einer Lagerschiene 14 erfolgt, sondern über Halterungselemente 16, welche den jeweiligen Querträger 2 übergreifen und an ihrem unteren Ende mit einem teilzylindrischen Klemmbereich 27 versehen sind, welche über den teilzylindrischen Bereich 10 der Profilschiene 6 klemmbar ist, um diese zu halten.

In Fig. 4 ist eine Seitenansicht auf die gemäß Fig. 1 links unten liegende Seite der Deckenverkleidung dargestellt, aus welcher sich nochmals die Ausgestaltung der Federbügel 15 zur Halterung der Lagerschienen 14 ergibt. Weiterhin ist aus dieser Fig. nochmals die Ausgestaltung der Klemmelemente 24 sowie deren Vorsprünge 25 zur Halterung der Platten 3 zu entnehmen.

Bei dem gezeigten Ausführungsbeispiel ist es möglich, die jeweiligen Rohre 5 nachträglich mit den Profilschienen 6 zu verrasten, wobei die Rohre an ihrem Anschlußbereich, wie in Fig. 4 gezeigt, nach oben gebogen sind, um eine Verbindung mit dem Anschlußrohr 17 zu ermöglichen. Es ist dabei möglich, die Rohre 5 sowie die Anschlußrohre 17 derartig vorzufabrizieren und an der Baustelle lediglich in Deckenkonstruktion einzusetzen.

Auf eine einzelne Darstellung und Beschreibung der Ausgestaltung der Platten 3 wird verzichtet, da diese in üblicher Weise ausgestaltet sind.

## Patentansprüche

1. Deckenverkleidung mit einem aus Längsträgern (1) und mit diesen verbundenen Querträgern (2) aufgebauten Raster, mit in den Rasterfeldern eingehängten Platten (3), sowie mit oberhalb der Platten (3) angeordneten Wärmetauscherelementen (4), dadurch gekennzeichnet, daß die Wärmetauscherelemente (4) mittels Magnetkraft an den Platten (3) gehaltert sind und eine im wesentlichen plane Unterfläche (7) aufweisen und daß die Haltemagnete (8) seitlich der planen Unterflächen (7) an den Wärmetauscherelementen (4) angeordnet sind und im wesentlichen in einer Ebene mit deren Unterflächen (7) liegen.

2. Deckenverkleidung nach Anspruch 1, dadurch gekennzeichnet, daß die Platten (3) aus einem dünnen Blechmaterial gefertigt sind.

3. Deckenverkleidung nach Anspruch 2, dadurch gekennzeichnet, daß die Platten (3) perforiert sind.

4. Deckenverkleidung nach Anspruch 2 oder 3, dadurch gekennzeichnet, daß die Sichtseite der Platte (3) mit einer porösen dünnen Beschichtung versehen ist.

5. Deckenverkleidung nach Anspruch 1 bis 4, dadurch gekennzeichnet, daß das Wärmetauscherelement (4) ein Rohr (5) und eine an dessen unterem Bereich gelagerte Profilschiene (6) umfaßt, welche eine im wesentlichen plane Unterfläche (7) aufweist.

6. Deckenverkleidung nach Anspruch 5, dadurch gekennzeichnet, daß an dem unteren Bereich der Profilschiene (6) Haltemagnete (8) angeordnet sind.

7. Deckenverkleidung nach Anspruch 5 oder 6, dadurch gekennzeichnet, daß die Profilschiene (6) mit seitlichen, bezüglich der Unterfläche zurückversetzten Flanschen (9) versehen ist, an welchen die Haltemagneten (8) angeordnet sind.

8. Deckenverkleidung nach einem der Ansprüche 5 - 7, dadurch gekennzeichnet, daß die Profilschiene (6) einen im wesentlichen U-förmigen Querschnitt aufweist und mit einem teilzylindrischen Bereich (10) zur Aufnahme des Rohres (5) versehen ist.

9. Deckenverkleidung nach einem der Ansprüche 5 - 8, dadurch gekennzeichnet, daß die Haltemagnete (8) jeweils streifenförmig ausgebildet sind.

10. Deckenverkleidung nach einem der Ansprüche 8 oder 9, dadurch gekennzeichnet, daß die Profilschiene 6 an den freien Enden der Schenkel (11) des U-Profils mit Verdickungen (12) versehen ist, welche formschlüssig in Ausnehmungen (13) der Querträger (2) haltbar sind.

11. Deckenverkleidung nach Anspruch 10, dadurch gekennzeichnet, daß der Querträger (2) zumindest eine parallel zu diesem angeordnete, zahnstangenartige Lagerschiene (14) umfaßt.

12. Deckenverkleidung nach Anspruch 11, dadurch gekennzeichnet, daß die Lagerschiene (14) mittels Federbügeln (15) an den Längsträgern (1) gehaltert ist.

13. Deckenverkleidung nach Anspruch 8 oder 9, dadurch gekennzeichnet, daß die Profilschiene (6) mittels Halterungselementen (16), welche die Querträger (2) umgreifen und an dem teilzylindrischen Bereich (10) verankerbar sind, an den Querträgern (2) gelagert ist.

14. Deckenverkleidung nach einem der Ansprüche 5 - 13, dadurch gekennzeichnet, daß oberhalb der Querträger (2) Anschlußrohre (17) angeordnet sind, von denen die Rohre (5) der Wärmetauscherelemente (4) abzweigen.

15. Deckenverkleidung nach einem der Ansprüche 6 - 14, dadurch gekennzeichnet, daß die Haltemagnete (8) mit der Profilschiene (6) fest verbunden sind.

## Claims

1. Ceiling panelling with a grid structure comprising longitudinal beams (1) and transverse beams (2) connected thereto, with panels (3) suspended in the spaces in the grid, and heat-exchanger members (4) arranged above the panels (3), **characterised in that** the heat-exchanger members (4) are retained on the panels (3) by magnetic force and have a substantially planar lower surface (7), and the holding magnets (8) are arranged on the heat-exchanger members (4) laterally to the planar lower surfaces (7) and are positioned substantially in the same plane as the lower surfaces (7) of the heat-exchanger members (4).

2. Ceiling panelling in accordance with claim 1, **characterised in that** the panels (3) are made from a thin sheet-metal material.

3. Ceiling panelling in accordance with claim 2, **characterised in that** the panels (3) are perforated.

4. Ceiling panelling in accordance with claim 2 or 3, **characterised in that** the visible surface of the panel (3) is provided with a thin porous coating.

5. Ceiling panelling in accordance with claims 1 to 4, **characterised in that** the heat-exchanger member (4) comprises a pipe (5) and a profiled rail (6) mounted on the lower surface thereof, the rail having a substantially planar lower surface (7).

6. Ceiling panelling in accordance with claim 5, **characterised in that** holding magnets (8) are arranged on the lower region of the profiled rail (6).

7. Ceiling panelling in accordance with claim 5 or 6, **characterised in that** the profiled rail (6) is provided with lateral flanges (9) set back in relation to the lower surface, the holding magnets (8) being arranged on the said flanges.

8. Ceiling panelling in accordance with one of claims 5 - 7, **characterised in that** the profiled rail (6) has a substantially U-shaped cross-section and is provided with a part-cylindrical region (10), to receive the pipe (5).

9. Ceiling panelling in accordance with one of claims 5 - 8, **characterised in that** the holding magnets (8) are each formed to be strip-shaped.

10. Ceiling panelling in accordance with one of claim 8 or 9, **characterised in that** the profiled rail (6) is provided with thickened portions (12) at the free ends of the limbs (11) of the U-shaped profile, and the said thickened portions can he retained in a positive-locking manner in recesses (13) in the transverse beams (2).

11. Ceiling panelling in accordance with claim 10, **characterised in that** the transverse beam (2) comprises at least one rack-like bearing rail (14) arranged parallel to the said beam.

12. Ceiling panelling in accordance with claim 11, **characterised in that** the bearing rail (14) is retained on the longitudinal beams (1) by means of spring clips (15).

13. Ceiling panelling in accordance with claim 8 or 9, **characterised in that** the profiled rail (6) is mounted on the transverse beams (2) by means of retaining, members (16) which engage around the transverse beams (2) and can be secured to the part-cylindrical region (10).

14. Ceiling panelling in accordance with one of claims 5 - 13, **characterised in that** connection pipes (17) are arranged above the transverse beams (2), and the pipes (5) of the heat-exchanger members (4) branch off from the said pipes (17).

15. Ceiling panelling in accordance with one of claims 6 - 14, **characterised in that** the holding magnets (8) are securely connected to the profiled rail (6).

## Revendications

1. Faux-plafond comportant un maillage réalisé à l'aide de profilés porteurs longitudinaux (1) et de traverses (2) reliées à ceux-ci, des plaques (3) emboîtées dans les mailles, ainsi que des éléments d'échangeur de chaleur (4) disposés au-dessus des plaques (3),
caractérisé en ce que les éléments d'échangeur de chaleur (4) tiennent aux plaques (3) par force magnétique et ont une face inférieure (7) essentiellement plane
et en ce que les aimants de retenue (8) sont disposés latéralement par rapport aux faces inférieures planes (7) sur les éléments d'échangeur de chaleur (4) et se trouvent essentiellement au même niveau que les faces inférieures (7) de ceux-ci.

2. Faux-plafond selon la revendication 1, caractérisé en ce que les plaques (3) sont fabriquées dans une tôle mince.

3. Faux-plafond selon la revendication 2, caractérisé en ce que les plaques (3) sont perforées.

4. Faux-plafond selon la revendication 2 ou 3, caractérisé en ce que la face apparente de la plaque (3) est recouverte d'un mince revêtement poreux.

5. Faux-plafond selon l'une des revendications 1 à 4, caractérisé en que l'élément d'échangeur de chaleur (4) comporte un tube (5) ainsi qu'un rail profilé (6) disposé sur la partie basse de celui-ci, lequel rail a une surface inférieure (7) essentiellement plane.

6. Faux-plafond selon la revendication 5, caractérisé en ce que sur la partie basse du rail profilé (6) sont disposés des aimants de retenue (8).

7. Faux-plafond selon la revendication 5 ou 6, caractérisé en ce que le rail profilé (6) est pourvu de brides (9) latérales en retrait par rapport à la surface inférieure, et sur lesquelles sont placés les aimants de retenue (8).

8. Faux-plafond selon l'une des revendications 5 à 7, caractérisé en ce que le rail profilé (6) présente une section essentiellement en U et est présente une zone partiellement cylindrique (10) destinée à recevoir le tube (5).

9. Faux-plafond selon l'une des revendications 5 à 8, caractérisé en ce que les aimants de retenue (8) se présentent chaque fois sous forme de bande.

10. Faux-plafond selon la revendication 8 ou 9, caractérisé en ce que le rail profilé (6) présente, aux extrémités libres des montants (11) du profilé en U, des épaississements (12), lesquels s'engagent et se bloquent dans des évidements (13) prévus dans les traverses (2).

11. Faux-plafond selon la revendication 10, caractérisé en ce que la traverse (2) comporte au moins un rail d'appui (14) du type crémaillères disposé parallèlement à celle-ci.

12. Faux-plafond selon la revendication 11, caractérisé en ce que le rail d'appui (14) est maintenu aux profils porteurs longitudinaux (1) à l'aide d'étriers à ressort (15).

13. Faux-plafond selon la revendication 8 ou 9, caractérisé en ce que le rail profilé (6) est monté sur les traverses (2) à l'aide d'éléments de fixation (16) qui enveloppent les traverses (2) et s'ancrent dans la zone partiellement cylindrique (10).

14. Faux-plafond selon l'une des revendications 5 à 13, caractérisé en ce qu'au-dessus des traverses (2) sont disposés des tuyaux de raccordement (17), desquels dérivent les tubes (5) des éléments d'échangeur de chaleur (4).

15. Faux-plafond selon l'une des revendications 6 à 14, caractérisé en ce que les aimants de retenue (8) sont solidaires du rail profilé (6).
